**Europäisches Patentamt**

**European Patent Office**

**Office européen des brevets**

(11) Veröffentlichungsnummer: **0 140 039**

**B1**

(12) **EUROPÄISCHE PATENTSCHRIFT**

(45) Veröffentlichungstag der Patentschrift:
27.04.88

(21) Anmeldenummer: **84110490.4**

(22) Anmeldetag: **04.09.84**

(51) Int. Cl.⁴: **B 30 B 5/06**

(54) **Kontinuierlich arbeitende Presse zum Pressen einer vorlaufenden Werkstoffbahn.**

(30) Priorität: **24.09.83 DE 3334584**

(43) Veröffentlichungstag der Anmeldung:
**08.05.85 Patentblatt 85/19**

(45) Bekanntmachung des Hinweises auf die Patenterteilung:
**27.04.88 Patentblatt 88/17**

(84) Benannte Vertragsstaaten:
**FR GB IT SE**

(56) Entgegenhaltungen:
**DD-C-132 059**
**DE-A-1 939 784**
**DE-A-2 735 142**

(73) Patentinhaber: **Held, Kurt, Alte Strasse 1, D-7218 Trossingen 2 (DE)**

(72) Erfinder: **Held, Kurt, Alte Strasse 1, D-7218 Trossingen 2 (DE)**

(74) Vertreter: **Hoeger, Stellrecht & Partner, Uhlandstrasse 14c, D-7000 Stuttgart 1 (DE)**

**Beschreibung**

Die Erfindung betrifft eine kontinuierlich arbeitende Presse zum Pressen einer vorlaufenden Werkstoffbahn nach dem Oberbegriff des Patentanspruchs 1.

Bei Pressen dieser Art (DE-OS-19 39 784, DE-AS-27 35 142) kommt es häufig zu einer unerwünschten Zerstörung der die Bandlagen bildenden Einzelbänder infolge Kaltverschweißung oder "Fressen" der Bandoberflächen, so daß sich solche Pressen in der Praxis bisher noch kaum durchsetzen konnten. Die Ursache für diese Erscheinungen war bisher unbekannt.

Es ist Aufgabe der Erfindung, solche unerwünschten Zerstörungserscheinungen bei einer gattungsgemäßen Presse mit Mehrlagenbandpaketen zu verhindern.

Die Aufgabe wird erfindungsgemäß durch die Merkmale im Kennzeichnungsteil des Patentanspruchs 1 gelöst.

Die nachstehende Beschreibung bevorzugter Ausführungsformen der Erfindung dient im Zusammenhang mit beiliegender Zeichnung der weiteren Erläuterung. Es zeigen:

Fig. 1 eine kontinuierlich arbeitende Presse mit aus mehreren Lagen bestehenden Preßbändern in schematischer Schnittansicht;

Fig. 2 eine vergrößerte Teilschnittansicht der Presse aus Fig. 1;

Fig. 3 eine Ansicht einer Umlenkrolle des Preßbandes;

Fig. 4 eine Schnittansicht einer scheibenförmigen Andrückrolle;

Fig. 5 eine Absaugeinrichtung für austretendes Schmiermittel und

Fig. 6 eine abgewandelte Absaugeinrichtung.

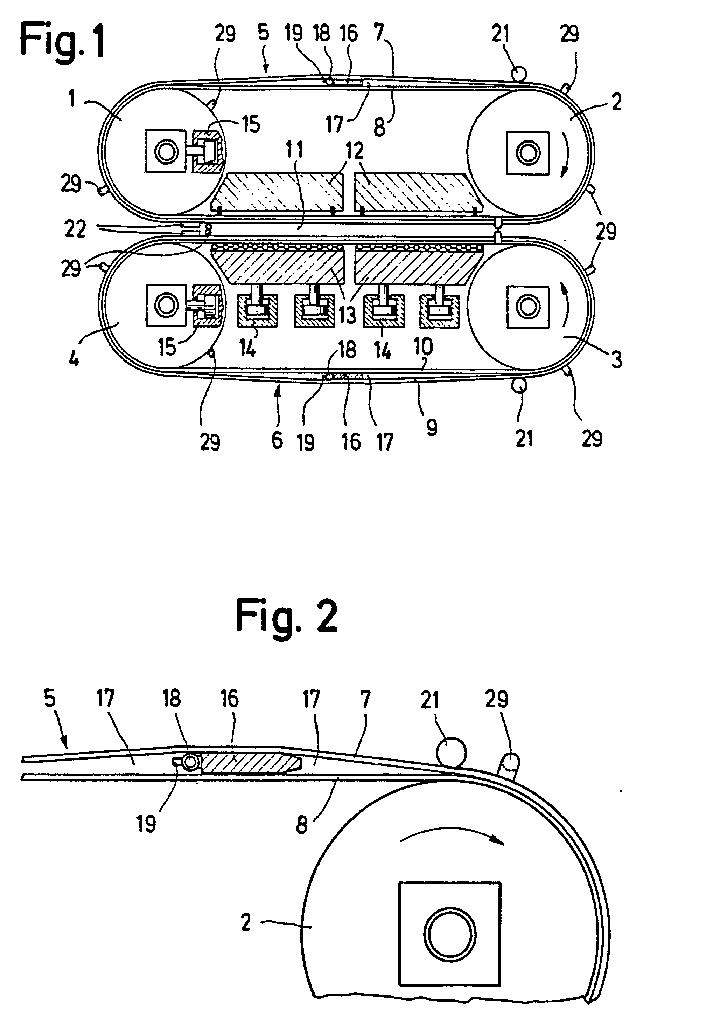

Bei der in Fig. 1 schematisch dargestellten, kontinuierlich arbeitenden Presse zum Pressen einer vorlaufenden Werkstoffbahn sind an einem nicht dargestellten Pressengestell vier Umlenkwalzen 1, 2, 3, 4 drehbar gelagert. Um die ein erstes Paar bildenden Walzen 1, 2 ist ein endloses, oberes Pressband 5, um die ein weiteres Paar bildenden Walzen 3, 4 ein unteres Pressband 6 herumgeführt. Beide Pressbänder 5, 6 bestehen aus zwei ineinandergeschobenen Bandlagen 7, 8 bzw. 9, 10. Die Umlaufrichtung ist durch die Pfeile in den Umlenkwalzen 2, 3 angegeben. Zwischen dem unteren Trum des oberen Pressbandes 5 und dem oberen Trum des unteren Pressbandes 6 liegt die Reaktions- oder Presszone 11, in welcher eine in Fig. 1 von rechts nach links vorlaufende Werkstoffbahn, vorzugsweise unter gleichzeitiger Anwendung von Wärme, druckverdichtet werden kann. Als Werkstoffe kommen insbesondere infrage mit Kunstharz getränkte Schichtstoffe, Spanplatten, Faserplatten, Sperrholz, Elektrolaminate und dergleichen. Um die gegebenenfalls erforderliche Wärme aufzubringen, kann die eine Walze 2, 3 jedes Walzenpaares geheizt sein. Der auf die Werkstoffbahn auszuübende Druck wird ausgehend von Druckplatten 12, 13 hydraulisch oder mechanisch auf die die Presszone 11 oben und unten begrenzenden Bandtrums übertragen. Bei hydraulischer Druckübertragung sind die Druckplatten 12 gestellfest gelagert. In den Raum zwischen Druckplatte 12 und Rückseite des zugeordneten Bandtrums wird ein unter Druck setzbares Druckmedium eingebracht. Bei der mechanischen Druckübertragung sind im Zwischenraum zwischen den verschieblich gelagerten Druckplatten 13 und dem zugeordneten Bandtrum quer über die Bandbreite verlaufende Walzen angeordnet. Die Druckplatten 13 mit den Walzen werden über am Pressengestell gelagerte Druckmittelzylinder 14 an das Bandtrum angedrückt. Schließlich sind die beiden Pressbänder 5, 6 in bekannter Weise über gestellfeste Spannmittel 15, z. B. Hydraulikzylinder, spannbar. Die Pressbänder bestehen aus Metall, insbesondere Stahl. Der bei der Umlenkung der Pressbänder 5, 6 an den Umlenkwalzen 1, 2, 3, 4 auftretende Krümmungsradius ist für die einzelnen Bandlagen 7, 8 bzw. 9, 10 der Bänder verschieden groß, so daß die einzelnen Bandlagen sich mit unterschiedlichen Geschwindigkeiten bewegen, wodurch zwischen den einzelnen Bandlagen eine Relativverschiebung hervorgerufen wird. Durch diese Relativverschiebung tritt an den sich berührenden Flächen der Bandlagen Gleitreibung auf, die zu einer Zerstörung der aufeinander aufliegenden Oberflächen der einzelnen Bandlagen führen kann. Um dies zu verhindern, ist erfindungsgemäß vorgesehen, daß die ein Pressband bildenden Bandlagen an ihren sich gegenseitig berührenden Flächen geschmiert werden.

Bei der auf der Zeichnung dargestellten Ausführungsform der Erfindung erfolgt die Schmierung mittels flüssiger oder pulverförmiger Schmiermittel, die zwischen die Bandlagen der Pressbänder eingebracht werden. Hierzu ist, vgl. Fig. 1 und 2, zwischen zwei Bandlagen 7, 8 bzw. 9, 10 ein Abstandhalter 16 eingebracht, und zwar an dem der Presszone 11 jeweils abgewandten Trum des Pressbandes 5 bzw. 6. Der Abstandhalter 16, der beispielsweise die Form eines Keiles oder einer Platte besitzt, spreizt die im übrigen Oberfläche an Oberfläche aufeinanderliegenden Bandlagen auseinander, so daß zwischen diesen Lagen ein Zwischenraum 17 entsteht. Der Abstandhalter erstreckt sich über die gesamte Breite des Pressbandes, so daß auch der Zwischenraum 17 über die ganze Bandbreite hinweg verläuft. Im Zwischenraum 17 ist eine Schmiermittelzuführung 18 zum Einbringen pulverförmigen oder flüssigen Schmiermittels, z. B. eines Schmieröls, vorgesehen. Die Zuführung 18, die sich vorzugsweise ebenfalls über die gesamte Pressbandbreite erstreckt, ist als Rohr ausgebildet und weist in gegenseitigen Abständen Austrittsöffnungen, z. B. in Gestalt von Düsen 19, für das Schmiermittel auf. Das unter Druck in das Rohr eingeführte Schmiermittel tritt aus den Düsen aus und verteilt sich im Zwischenraum 17 über die einander zugekehrten Oberflächen der Bandlagen. Durch geeignete Wahl der gegenseitigen Abstände zwischen den Austrittsöffnungen erreicht man, daß die gesamten Oberflächen gleichmäßig mit Schmiermittel bedeckt werden. Durch die Umlaufbewegung der Pressbänder 5, 6 wird schließlich das Schmiermittel mitgenommen, so daß schließlich insgesamt die sich nach Verlassen des Zwischenraumes 17 wieder gegenseitig berührenden Flächen der das Pressband bildenden Bandlagen mit Schmiermittel bedeckt sind.

Es ist unerheblich, ob die Schmiermittelzuführung 18 mit Bezug auf die Vorlaufrichtung des Pressbandes vor oder hinter dem Abstandhalter 16 angeordnet ist. In Fig. 1 und 2 liegt sie vor diesem Halter. Sei einer bevorzugten Ausführungsform der Erfindung ist vorgesehen, daß Abstandhalter 18 und Schmiermittelzuführung 19 als einstückiges Teil ausgebildet sind, beispielsweise dadurch, daß im Abstandhalter selbst ein an eine Schmiermittelpumpe anschließbarer Hohlraum mit Austrittsöffnungen ausgebildet ist.

Besteht ein Pressband 5, 6 aus mehr als zwei Bandlagen 7, 8 bzw. 9, 10, so wird ein Abstandhalter 16 mit Schmiermittelzuführung 18 zwischen jeweils zwei Bandlagen vorgesehen, so daß sämtliche, sich gegeneinander bewegenden Oberflächen der Bandlagen geschmiert sind.

Überschüssiges Schmiermittel, insbesondere flüssiges Schmieröl, das an den Kanten der Pressbänder 5, 6 austreten und in der Presszone 11 die Werkstoffbahn verunreinigen könnte, wird vorher entfernt. Hierzu dienen Andrückrollen 21, 22, die im Bereich der Umlenkwalzen 1, 2, 3, 4 angeordnet sind, so daß sie die Bandkanten gegen die Mantelfläche dieser Walzen drücken können. Vorzugsweise sind diese Andrückrollen dort vorgesehen, wo der im wesentlichen geradlinige Verlauf der Pressbänder in den gekrümmten Verlauf an den Umlenkwalzen übergeht. Die Andrückrollen greifen an der Kante der jeweils außen liegenden Bandlage eines zweilagigen Pressbandes an.

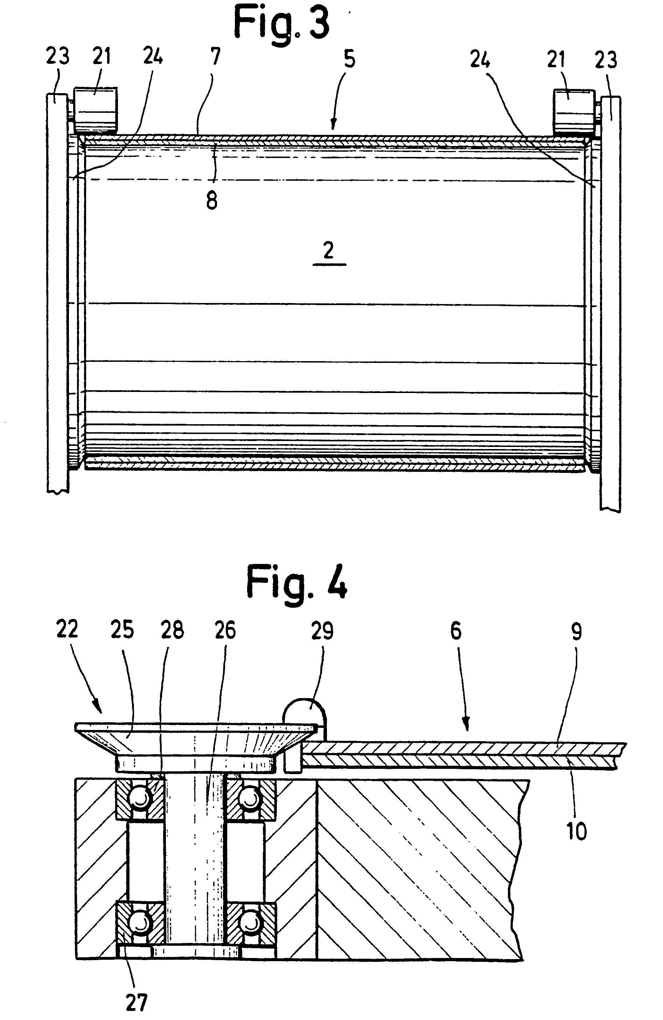

Wie in Fig. 3 dargestellt, überragen die in gestellfesten Halterungen 23 drehbar gelagerten, als zylindrische Walzen ausgebildeten Andrückrollen 21 zum einen Teil die Kanten des Pressbandes 5 und zum andern Teil Bordscheiben 24, die an den Stirnseiten der Umlenkwalze 2 vorgesehen sind. Die Bordscheiben 24 dienen der Führung der Bandlagen 7, 8 des Pressbandes 5 und verhindern ein unerwünschtes seitliches Verschieben der Bandlagen relativ zueinander und zur Umlenkwalze. Die Andrückrollen 21 drücken gegen die Pressbandkanten, wodurch das an den Kanten der einzelnen Bandlagen 7, 8 angesammelte Schmiermittel ausgepresst wird und seitlich herausfließt. Von dort wird es in noch zu beschreibender Weise entfernt, so daß es sich in der Reaktionszone 11 nicht störend auswirken kann.

Die in Fig. 3 dargestellten, zylindrischen Andrückrollen 21 können bei einer anderen Ausführungsform der Erfindung auch eine kegelstumpfförmige Gestalt mit zur Pressbandmitte hin weisenden Kegelspitzen haben, was zu einer besseren Anpassung an den dynamischen Verlauf der Pressbandkante im Bereich von Andrückwalze 21 und Umlenkwalze führt.

Im Bereich der Presszone 11 kann aus Platzgründen eine walzenförmige Andrückrolle 21 gemäß Fig. 3 nicht angeordnet werden. Dort wird, vgl. Fig. 1 und 4, als Andrückrolle 22 eine flach konische Scheibe 25 verwendet, die mit einer Achse 26 in Wälzlagern 27, 28 drehbar gelagert ist und mit ihrer kegelförmig abgeschrägten Seitenfläche auf die Kante des zweilagigen Pressbandes 6 drückt. Bei einer anderen Ausführungsform der Erfindung könnte die Andrückrolle 22 auch als Scheibe ausgebildet sein und mit ihrer einen Stirnfläche auf die Kante des Pressbandes drücken. In jedem Fall ist die Überlappung zwischen Andrückrolle und Pressband so gering, daß die zusammen mit dem Pressband vorlaufende Werkstoffbahn nicht gestört wird.

Die Andrückrollen 21 oder 22 dienen gleichzeitig auch dazu, ein gegenseitiges Verlaufen der Bandlagen der Pressbänder relativ zueinander zu verhindern, indem sie die einzelnen Bandlagen so niederhalten, daß sie sich innerhalb der von dem Bordscheiben 24 gebildeten Führungen bewegen.

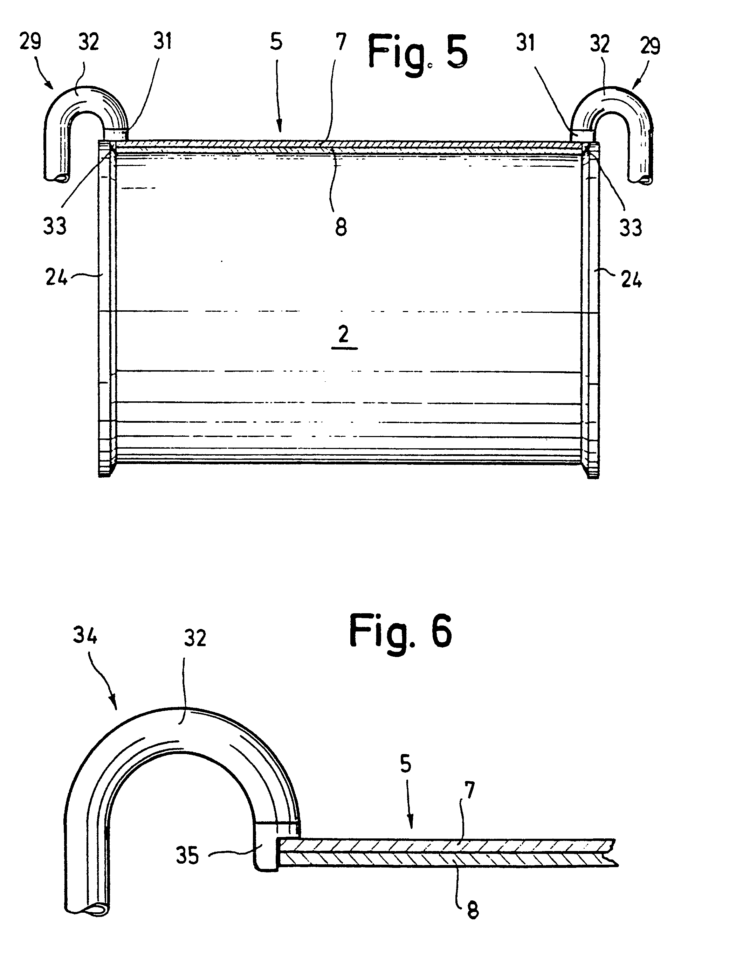

Die Entfernung ausgetretenen Schmiermittels erfolgt mit Hilfe von Aufnehmern 29, die, wie aus Fig. 1 ersichtlich, angeordnet sind. Die Aufnehmer 29 sind vorzugsweise in der Nähe der Andrückrollen 21, 22 angeordnet, um das von diesen Rollen ausgepresste Schmiermittel aufzunehmen. Wie aus Fig. 5 hervorgeht, sind die Aufnehmer 29 als Saugdüsen 31 ausgebildet, die über Leitungen 32 an (nicht dargestellte) Saugpumpen angeschlossen sind. Im Betrieb der Presse gleiten die Kanten der Pressbänder 5, 6 an den Saugdüsen 31 vorbei, so daß überschüssiges Schmiermittel abgesaugt wird. Wie aus Fig. 5 hervorgeht, überdecken die Saugdüsen 31 teilweise auch die Bordscheiben 24. Somit kann auch das in den Hohlraum 33 zwischen der abgeschrägten Kante der Bordscheibe 24 und der Kante des mehrlagigen Pressbandes 5 ausgetretene Schmiermittel aufgenommen und entfernt werden.

Wie aus Fig. 1 hervorgeht, können bei Bedarf an den Umlenkwalzen oder an den Pressbändern an den verschiedensten Stellen weitere Aufnehmer 29 angeordnet werden. Die Aufnehmer 29 können sich auch, falls erforderlich, über die gesamte Breite der Umlenkwalzen und der Pressbänder hinwegerstrecken, falls sich Schmiermittel über die ganze Pressbandbreite hinweg ausbreiten sollte.

Die Fig. 6 zeigt einen Aufnehmer 34, dessen Saugdüse 35 den Rand des Pressbandes 5 und dessen Seitenflächen vollständig überdeckt. Eine solche Ausführungsform eignet sich für Aufnehmer, die nicht an Stellen der Presse angeordnet werden sollen, wo die Seitenflächen des Pressbandes von den Bordscheiben 24 der Umlenkwalzen verdeckt sind.

Abgesaugtes Schmiermittel wird im übrigen über ein Filter und, falls notwendig, von Rückständen gereinigt, erneut über die Schmiermittelzuführungen 18 zwischen die Lagen der Pressbänder eingebracht.

Bei einer anderen Ausführungsform der Erfindung erfolgt die Schmierung der einzelnen Pressbandlagen mittels einer Metallschicht, die selbstschmierend ausgebildet ist und daher gute "Notlaufeigenschaften" hat. In diesem Falle erhalten die in aller Regel ebenfalls aus Metall, z. B. Stahl bestehenden Pressbänder 5, 6 eine entsprechende Metallbeschichtung. Hierfür eignen sich insbesondere Dispersionsbeschichtungen aus Nickel, Chrom oder dergleichen, wobei eine disperse Phase in Form von fein verteilten Partikeln in einer Metallmatrix vorliegt. Während die Matrix als Einbettmasse die Partikel fixiert, wirken diese Partikel verschleißhemmend oder als Trockenschmiermittel. Die Partikel können dabei vorzugsweise aus Graphit, Molybdändisulfid, Teflon oder dergleichen bzw., soweit es sich um harte Teilchen handelt, aus Siliziumkarbid, Eisenborid oder dergleichen bestehen. Die Metallmatrix kann chemisch über Redox-Reaktionen, galvanisch oder auch durch Flamm- oder Plasma-Spritzen aufgebracht werden. Eine weitere Möglichkeit, verschleißfeste Oberflächen einander berührender Bandlagen eines Pressbandes herzustellen, besteht im Eindiffundieren unter Vakuum gasförmiger, nicht zum "Fressen" neigender Karbide, Nitride, Oxide, Boride, wie beispielsweise TiC, TiN, CrC oder dergleichen in die Bandlagenoberfläche.

Bei wiederum einer anderen Ausführungsform der Erfindung erfolgt die gegenseitige Schmierung der ein Pressband bildenden Bandlagen durch Ausstattung dieser Lagen mit Kunststoffschichten, die ihrerseits mit guten Notlaufeigenschaften aneinander reiben können. Hierfür eignen sich insbesondere Beschichtungen aus Teflon, Polyimiden mit Graphit-Füllung, Polyacetal und sogenannte selbstschmierende Lagerwerkstoffe. Bei den letzteren handelt es sich um Verbindungen, die aus einem halogenierten, festen Kohlenwasserstoff aufgebaut sind, der seinerseits mit auf bestimmte Einsatzfälle abgestimmten, homogen verteilten Füllstoffen angereichert ist.

Die in die jeweilige Beschichtung der einzelnen Bandlagen eines Pressbandes eingelagerten Trocken- oder Selbstschmiermittel führen zu einer Verminderung des Gleitreibungskoeffizienten zwischen den Bandlagen, wodurch die Reibungskraft und damit die auftretende Reibungswärme verringert werden. Somit wird ein Kaltverschweißen oder "Fressen", das bei örtlicher Überhitzung durch Reibungswärme zweier aufeinanderliegender Bandlagenoberflächen auftreten kann, wirksam verhindert.

Besonders große Sicherheit gegen ein Kaltverschweißen zweier Pressbandlagen unter allen möglichen Betriebsbedingungen besteht erfindungsgemäß dann, wenn die Schmierung mittels eines Schmiermittels, z. B. Schmieröl mit einer auf die Pressbandlagen aufgebrachten Metall- oder Kunststoffschicht der vorerwähnten Art kombiniert wird. Das Schmiermittel (Schmieröl) bildet dabei einen Gleitfilm mit besonders kleinem Gleitreibungskoeffizienten und sorgt für eine gute Abführung entstehender Reibungswärme. Falls es unter besonders ungünstigen Betriebsbedingungen, beispielsweise bei besonders hohem Druck, zu einer stellenweisen Verdrängung des Schmiermittels und damit zu einer stellenweise Überhitzung des Pressbandes und somit zu einer Gefahr des "Fressens" kommt, so treten die Notlaufeigenschaften der Oberflächenbeschichtungen aus Metall oder Kunststoff in Wirkung, wodurch diese Gefahr gebannt ist. Selbst bei einem Totalausfall einer Schmiermittelzuführung kann die Presse dann ohne das Risiko einer Zerstörung der teuren, mehrlagigen Pressbänder weiterbetrieben werden.

**Patentansprüche**

1. Kontinuierlich arbeitende Presse zum Pressen einer vorlaufenden Werkstoffbahn mit einem oberen und einem unteren, endlosen, aus Metall hoher Zugfestigkeit bestehenden Preßband aus mehreren ineinandergeschobenen Bandlagen, wobei die Bandlagen des oberen bzw. des unteren Preßbandes jeweils um ein gemeinsames Paar von Umlenkwalzen geführt sind, und mit einer zwischen dem unteren Trum des oberen und dem oberen Trum des unteren Preßbandes ausgebildeten Preßzone für die Werkstoffbahn, dadurch gekennzeichnet, daß die ein Preßband (5, 6) bildenden Bandlagen (7, 8 bzw. 9, 10) an ihren sich gegenseitig berührenden Flächen geschmiert sind und/oder die sich berührenden Flächen Beschichtungen aufweisen, die selbst oder aufgrund in ihnen enthaltener Partikel Trockenschmiereigenschaften aufweisen.

2. Presse nach Anspruch 1, dadurch gekennzeichnet, daß die Beschichtung der sich gegenseitig berührenden Flächen aus einer Metallmatrix besteht, in die fein verteilt die Trockenschmiereigenschaften aufweisenden Partikel eingelagert sind.

3. Presse nach Anspruch 2, dadurch gekennzeichnet, daß die eingelagerten Partikel aus Molybdänsulfid, Graphit und/oder Teflon bestehen.

4. Presse nach Anspruch 1, dadurch gekennzeichnet, daß die Beschichtung der einander berührenden Flächen aus einer Trockenschmiereigenschaften aufweisenden Kunststoffschicht besteht.

5. Presse nach Anspruch 4, dadurch gekennzeichnet, daß die Kunststoffschicht aus Teflon, Polyimiden mit Graphitfüllungen und/oder Polyacetal besteht.

6. Presse nach Anspruch 1, dadurch gekennzeichnet, daß zwischen jeweils zwei Bandlagen (7, 8 bzw. 9, 10) an dem der Preßzone (11) abgewandten Trum des Preßbandes (5, 6) ein Abstandhalter (16) sowie eine Schmiermittelzuführung (18), an den Kanten eines Preßbandes im Bereich einer Umlenkwalze (1, 2, 3, 4) Andrückrollen (21, 22) und wenigstens im Bereich der Andrückrollen Aufnehmer (29, 34) zur Entfernung aus den Bandlagen ausgetretenen Schmiermittels angeordnet sind.

7. Presse nach Anspruch 6, dadurch gekennzeichnet, daß die Andrückrollen (21, 22) sowohl die Kante des Preßbandes (5, 6) als auch eine an der Umlenkwalze (1, 2, 3, 4) vorgesehene Bordscheibe (24) überragen.

8. Presse nach Anspruch 6 oder 7, dadurch gekennzeichnet, daß der Abstandhalter (16) keilförmig ist.

9. Presse nach Anspruch 6, 7 oder 8, dadurch gekennzeichnet, daß die Schmiermittelzuführung (18) ein mit Austrittsöffnungen (19) für das Schmiermittel versehenes Rohr umfaßt.

10. Presse nach einem der Ansprüche 6 bis 9, dadurch gekennzeichnet, daß der Abstandhalter (16) und die Schmiermittelzuführung (18) als einstückiges Teil ausgebildet sind.

11. Presse nach einem der Ansprüche 6 bis 10, dadurch gekennzeichnet, daß die Andrückrollen (22) aus einer Scheibe (25) mit konischem Rand bestehen.

12. Presse nach einem der Ansprüche 6 bis 11, dadurch gekennzeichnet, daß der Aufnehmer (29, 34) als Saugrohr (32) ausgebildet ist und mit einer Saugöffnung (31, 35) an den vorbeilaufenden Preßbandkanten gleitet.


**Claims**

1. Continuously operating press for pressing a forwardrunning web of material with a press band of several band layers pushed one into the other, having an upper and a lower endless press band of metal of high tensile stress, the band layers of the upper or of the lower press band being respectively passed around a common pair of deflection rollers, and with a pressing region for the web of material provided between the lower strand of the upper, and the upper strand of the lower press band, characterised in that the band layers (7, 8 or 9, 10) constituting a press band (5, 6) are lubricated on their surfaces in mutual contact and/or the contacting surfaces have coatings which possess dry lubrication properties of themselves, or as a result of the particles contained in them.

2. Press according to Claim 1, characterised in that the coating of the mutually contacting surfaces consists in a metal matrix into which finely distributed particles exhibiting the dry lubrication properties have been incorporated.

3. Press according to Claim 2, characterised in that the incorporated particles consist of molybdenum sulphide, graphite and/or teflon.

4. Press according to Claim 1, characterised in that the coating of the mutually contacting surfaces consists in a plastic coating exhibiting dry lubrication properties.

5. Press according to Claim 4, characterised in that the plastic layer consists of teflon, polyimdes with graphite fillings and/or polyacetal.

6. Press according to Claim 1, characterised in that between every two band layers (7, 8 or 9, 10) on the strand of the press band (5, 6) facing away from the pressing region (5, 6) there are disposed a spacer (16) as well as a lubricant duct (18), there is provided on the edges of a press band in the area of a deflection roller (1, 2, 3, 4) a set of pressure rollers (21, 22), and at least in the region of the pressure rollers taking-up devices (29, 34) are disposed for the removal of lubricant which has come out of the band layers.

7. Press according to Claim 6, characterised in that the pressure rollers (21, 22) protrude above the edge of the press band (5, 6) as well as above a flanged wheel (24) provided on the deflection roller (1, 2, 3, 4).

8. Press according to Claim 6 or 7, characterised in that the spacer (16) is wedge-shaped.

9. Press according to Claim 6, 7, or 8, characterised in that the lubricant duct (18) comprises a pipe with outlet openings (19) for the lubricant.

10. Press according to one of Claims 6, to 9, characterised in that the spacer (16) and the lubricant duct (18) are formed as a one-piece part.

11. Press according to one of Claims 6 to 10, characterised in that the pressure rollers (22) consist in a disc (25) with conical edge.

12. Press according to one of Claims 6 to 11, characterised in that the take-up device (29, 34) is constructed as a suction pipe (32) and with a suction opening (31, 35) sliding on the press band edges as they run by.


**Revendications**

1. Presse travaillant en continu pour presser une bande de matière en mouvement, avec une bande de pression supérieure et une bande de pression inférieure, sans fin, en métal à haute résistance à la traction, composées de plusieurs couches de bande introduites les unes dans les autres, dans laquelle les couches de bande de la bande de pression supérieure et celles de la bande de pression inférieure sont guidées respectivement autour d'une paire de cylindres de renvoi communs, et avec une zone de pression de la bande de matière ménagée entre le brin inférieur de la bande de pression supérieure et le brin supérieur de la bande de pression inférieure, caractérisée en ce que les couches de bande (7, 8; 9, 10) composant une bande de pression (5 ; 6) sont lubrifiées sur leurs surfaces se frottant mutuellement et/ou les surfaces se frottant présentent des enduits qui ont par eux-mêmes, ou grâce à des particules qu'ils contiennent, des propriétés de lubrification à sec.

2. Presse selon la revendication 1, caractérisée en ce que l'enduit des surfaces se frottant mutuellement est composé d'une matrice métallique dans laquelle sont noyées à l'état finement réparti les particules ayant des propriétés de lubrification à sec.

3. Presse selon la revendication 2, caractérisée en ce que les particules noyées sont des particules de sulfure de molybdène, de graphite et/ou de téflon.

4. Presse selon la revendication 1, caractérisée en ce que l'enduit des surfaces se frottant mutuellement est une couche de matière plastique possédant des propriétés de lubrification à sec.

5. Presse selon la revendication 4, caractérisée en ce que la couche de matière plastique est une couche de téflon, de polyimides avec charges de graphite, et/ou de polyacétal.

6. Presse selon la revendication 1, caractérisée en ce qu'il est prévu entre deux couches de bande (7, 8 et/ou 9, 10, sur le brin de la bande de pression (5, 6) situé à l'opposé de la zone de pression (11) un écarteur (16) ainsi qu'une arrivée de lubrifiant (18), sur les bords d'une bande de pression dans la région d'un cylindre de renvoi (1, 2, 3, 4) des galets-presseurs (21, 22), et, au moins dans la zone des galets presseurs, un dispositif de ramassage (29, 34) pour l'évacuation du lubrifiant sortant des couches de bande.

7. Presse selon la revendication 6, caractérisée en ce que les galets-presseurs (21, 22) sont en saillie aussi bien par rapport au bord de la bande de pressage (5, 6) que par rapport à une bordure annulaire (24) prévue sur le cylindre de renvoi (1, 2, 3, 4).

8. Presse selon la revendication 6 ou 7, caractérisée en ce que l'écarteur (16) a la configuration d'un coin.

9. Presse selon l'une quelconque des revendications 6, 7 ou 8, caractérisée en ce que l'arrivée de lubrifiant (18) comprend un tube prévu avec des ouvertures de sortie (19) pour le lubrifiant.

10. Presse selon l'une quelconque des revendications 6 à 9, caractérisée en ce que l'écarteur (16) et l'arrivée de lubrifiant (18) sont en une seule pièce.

11. Presse selon l'une quelconque des revendications 6 à 10, caractérisée en ce que les galets-presseurs (22) ont la configuration d'un disque (25) à bord tronconique.

12. Presse selon l'une quelconque des revendications 6 à 11, caractérisée en ce que le dispositif de ramassage (29, 34) est conformé en tuyau d'aspiration (32) et il glisse par un orifice d'aspiration (31, 35) le long des bords de la bande de pression en déplacement devant lui.

# Fig. 1

# Fig. 2

1

0 140 039

# Fig. 3

# Fig. 4

3

## Fig. 5

## Fig. 6